# EUROPEAN PATENT SPECIFICATION

(11) **EP 1 194 746 B1**
(45) Date of publication and mention of the grant of the patent: **05.08.2009**
(21) Application number: 00943200.6
(22) Date of filing: 27.06.2000
(51) Int. Cl.: G01F 1/74, G01F 1/712, G01F 1/708

(54) **MULTIPLE FLOW RATE MEASUREMENT USING UNSTEADY PRESSURES**
MEHRPHASENDURCHFLUSSMESSUNG UNTER VERWENDUNG VON DRUCKÄNDERUNGEN
MESURE DE DEBIT D'ECOULEMENT DE PLUSIEURS CONSTITUANTS A L'AIDE DE MESURES DE PRESSIONS NON STABILISEES

(30) Priority: 02.07.1999 US 346605
(43) Date of publication of application: 10.04.2002
(73) Proprietor: WEATHERFORD/LAMB, INC., Houston Texas 77027 (US)
(72) Inventor: GYSLING, Daniel, L., Glastonbury, CT 06033 (US); MCGUINN, Rebecca, S., Middletown, CT 06457 (US); WINSTON, Charles, R., Glastonbury, CT 06033 (US)
(74) Representative: Asquith, Julian Peter
(86) International application number: PCT/US2000/017641
(87) International publication number: WO 2001/002811

(56) References cited:
- US-A- 5 367 911
- US-A- 5 591 922
- US-A- 5 708 211
- MESCH F: "SPEED AND FLOW MEASUREMENT BY AN INTELLIGENT CORRELATION SYSTEM" ADVANCES IN INSTRUMENTATION AND CONTROL,US,INSTRUMENT SOCIETY OF AMERICA, RESEARCH TRIANGLE PARK, vol. 45, no. PART 04, 1990, pages 1899-1914, XP000172126 ISSN: 1054-0032

## Description

### Technical Field

This invention relates to the measurement of flow rate of a fluid and more particularly to measuring flow rate using unsteady pressure measurements.

### Background Art

In many industries it is desirable to measure the flow rate of a multiphase fluid. In the oil and gas industry, or comparable industries, for example, it is desirable to measure the flow rate of multiphase fluids, especially fluids having three phases, such as oil, water and gas. It is known also to measure the flow rate of certain fluids (one or more liquids and/or gases) in a pipe using cross-correlation flow meters. Such meters measure an element of the flow that moves or convects with (or is related to) the fluid flow (or a group of fluid particles). The meter measures this element at two locations separated by a known distance along the flow path and then calculates the time for such element to move between the two locations. The time delay is determined by a cross-correlation of the two measured signals. A velocity is then determined by the distance between the measurements divided by the time delay. The flow velocity is then related to the flow rate by calibration.

One such cross-correlation meter that measures flow rate in a multiphase flow is described in US Patent No. 5,591,922, entitled "Method and Apparatus for Measuring Multiphase Flow", to Segeral et al, issued Jan. 7, 1997. In that case, a pair of venturis are located a predetermined distance apart which induce a change in flow speed through the venturi and a resulting pressure difference (or delta-P) across each venturi, which are measured. The delta-P pressure signals measured at each venturi are cross-correlated to determine the time delay which is indicative of the total volume flow rate. However, such a technique requires a change in the flow properties (e.g., flow velocity or density) at the two measurement points to make the measurement. Also, the delta-P is generated with an area contraction or constriction, and is not a naturally occurring observable characteristic of the fluid.

The paper entitled "Speed and Flow Measurement by an Intelligent Correlation System" by Franz Mesch (in Advances in Instrumentation and Control, Instrument Society of America, Research Triangle Park, vol. 45, no. part 04, 1990, pages 1899-1914, ISSN:1054-0032) discloses a correlation method for non-contact and non-intrusive measurement of speed and flow consisting of a transit time correlator having functions such as adaptive input signal conditioning, status signal monitoring and self-check.

US 5,708,211 discloses an apparatus and a corresponding method in which first and second differential pressures are measured, and these measurements are used to determine the type of flow anomaly that is moving through a pipe analysis section containing the differential pressure sensors.

US 5,367,911 discloses a device for sensing fluid behaviour, for example flow, in a conduit such as a downhole in a well. The device comprises two or more spaced sensors, the signals from which are compared to determine movement of the medium within the conduit.

### Summary of the Invention

Objects of the present invention include provision of a system for measuring the flow rate (or velocity) of multiple constituents within a fluid mixture flowing in pipes.

According to the present invention, there is provided an apparatus for measuring a velocity of a fluid mixture moving in a conduit, comprising: the conduit; a spatial array of sensors, each sensor being disposed at a different axial location along the conduitand being operable to provide a sensor signal indicative of a property of the fluid; spatial filter logic operable to use said sensors to provide a plurality of filters for measuring a vortical flow field at a plurality of different respective axial locations along the conduit thereby to provide a corresponding plurality of vortical flow signals, each filter of the plurality having a predetermined axial separation from each other filter of the plurality, and each filter of the plurality being connected operatively to a different pair of sensors of said plurality for receiving therefrom a corresponding pair of sensor signals; and a signal processor operatively connected for receiving vortical flow signals at least including those from a preselected pair of filters of said plurality and operable to provide a vortical velocity signal indicative of a velocity of the vortical flow field moving between the two filters of the preselected pair; **characterised in that** each of said sensors is an unsteady pressure sensor, said property of said fluid is an unsteady pressure of the fluid, said vortical flow field measured by said filters is a vortical pressure field, said vortical flow signals are vortical pressure signals, said spatial filter logic is reconfigurable to allow selection of the desired spacing between sensors within each filter of a preselected pair and the desired spacing between the filters of that pair and operable to provide at least three filters, and said spatial filter logic and signal processor are operable cooperatively to provide a vortical velocity signal for at least two different preselected pairs of filters.

In an embodiment of the present invention the signal processor combines certain ones of the unsteady pressure signals to provide a first filter which measures the vortical pressure field at a first location about the pipe and which provides a first vortical pressure signal indicative of the vortical pressure field and a second filter which measures the vortical pressure field at a second location about the pipe and which provides a second vortical pressure signal indicative of the vortical pressure field. The signal processor comprises logic, which calculates a cross-correlation between the first and the second vortical pressure signals and provides a time delay signal indicative of the time it takes for the vortical pressure field to move from the first location to the second location. The signal processor further comprises logic, which provides a vortical velocity signal indicative of the velocity of the vortical pressure field moving in the pipe that is related to the velocity of the fluid mixture moving in the pipe. In an embodiment of the present invention, the fluid mixture is comprised of a plurality of constituents and the velocity signal is related to the velocity of one of the constituents moving in the pipe.

In an embodiment of the present invention, an apparatus for measuring a velocity of a fluid mixture comprised of a plurality of constituents moving in a pipe comprises a spatial array of unsteady pressure sensors disposed on the pipe, the sensors providing a corresponding array of unsteady pressure signals and a signal processor, responsive to the array of unsteady pressure signals, which provides a plurality of velocity signals, each velocity signal indicative of a velocity of a vortical pressure field moving in the pipe. In an embodiment of the present invention the signal processor combines certain ones of the unsteady pressure signals to provide a first filter which measures the vortical pressure field at a first location about the pipe and which provides a first vortical pressure signal indicative of each the vortical pressure field and a second filter which measures the vortical pressure field at a second location about the pipe and which provides a second vortical pressure signal indicative of the vortical pressure field. In an embodiment of the present invention the velocity signals are related to the velocity of each of the constituents moving in the pipe.

An embodiment of the present invention determines a convection velocity by measuring unsteady (or dynamic or ac) pressures and extracting the pressure signal indicative of a vortical pressure (or flow) field (or perturbation) which convects at or near the average velocity of the fluid. The vortical pressure field is then used to determine the convection velocity by cross-correlation techniques, such convection velocity being proportional (or approximately equal to) the flow rate of a constituent of the fluid mixture. If needed, the flow rate of the constituent may then be determined by calibrating the convection velocity to the flow rate.

An embodiment of the invention may be used to measure the velocity of any inhomogeneous flow field, such as gas bubbles, gas slugs, particles, or chunks of material, and its associated pressure field that propagates within a flow provided the spatial filters have a separation within the acceptable coherence length of the flow field to be measured and the sensor spacing within each spatial filter is longer than a characteristic spatial length of the flow field.

An embodiment of the invention may be used with any combinations of liquids and/or gases. The invention will also work in any other environment or applications or any other fluids (one or more liquids and/or gases) or mixtures. An embodiment of the invention will work with any pipe or tube or with any conduit that carries fluid. An embodiment of the invention has no inherent flow range limitations, and, as such, can measure very low flow rates and has no maximum flow rate limit. An embodiment of the invention will also work if the fluid is flowing in either direction in the pipe. Further, an embodiment of the invention may be used directly on a pipe or on a tube inserted into a flowing fluid.

The foregoing and other objects, features and advantages of the present invention will become more apparent in light of the following detailed description of exemplary embodiments thereof.

### Brief Description of the Drawings

Fig. 1 is a schematic block diagram of a velocity measurement system for use in explaining the present invention.
Fig. 2 is a side view of a pipe having a plurality of spatial filters along an axial array with varying distances from a first filter, in accordance with the present invention.
Fig. 3 is a side view of a pipe having a plurality of spatial filters along an axial array with varying distances between filters and each filter having a different sensor spacing, in accordance with the present invention.
Fig. 4 is a schematic block diagram of a velocity measurement system having a plurality of spatial filters along an axial array along a pipe, in accordance with the present invention.
Fig. 5 is a schematic drawing of a flow meter in a well, in accordance with the present invention.

### Best Mode for Carrying Out the Invention

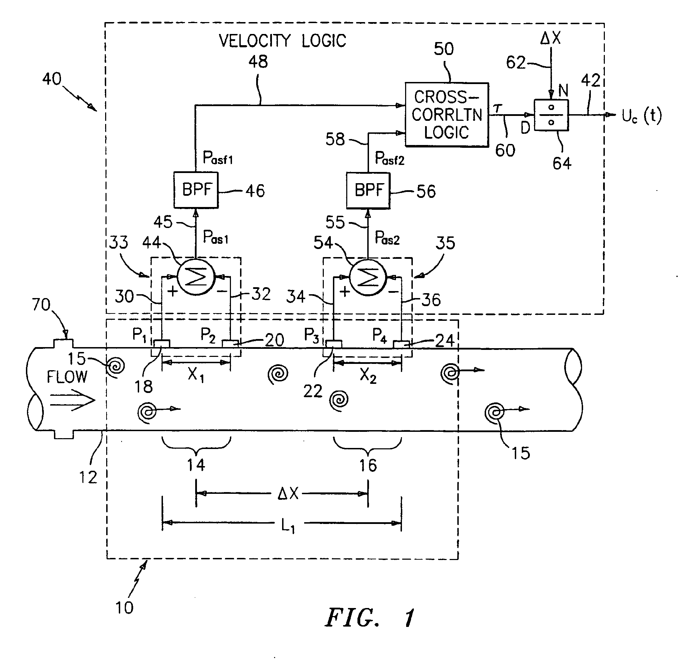

Referring to Fig. 1, a velocity and flow measurement system includes a sensing section 10 along a pipe 12 and a velocity logic section 40. The pipe (or conduit) 12 has two measurement regions 14,16 located a distance ΔX apart along the pipe 12. At the first measurement region 14 are two unsteady (or dynamic or ac) pressure sensors 18,20, located a distance X₁ apart, capable of measuring the unsteady pressure in the pipe 12, and at the second measurement region 16, are two other unsteady pressure sensors 22,24, located a distance X₂ apart, capable of measuring the unsteady pressure in the pipe 12. Each pair of pressure sensors 18,20 and 22,24 act as spatial filters to remove certain acoustic signals from the unsteady pressure signals, and the distances X₁, X₂ are determined by the desired filtering characteristic for each spatial filter, as discussed hereinafter.

The flow measurement system 10 measures velocities associated with unsteady flow fields and/or pressure disturbances represented by 15 associated therewith relating to turbulent eddies (or vortical flow fields), inhomogeneities in the flow (such as bubbles, slugs, and the like), or any other properties of the flow, fluid, or pressure, having time varying or stochastic properties that are manifested at least in part in the form of unsteady pressures. The vortical flow fields 15 are, in general, comprised of pressure disturbances having a wide variation in length scales and which have a variety of coherence length scales such as that described in the reference "Sound and Sources of Sound", A. P. Dowling et al, Halsted Press, 1983. Certain of these vortical flow fields convect at or near/or related to the mean velocity of at least one of the fluids within a mixture flowing in a pipe. More specifically, the vortices convect in a predictable manner with reference to the fluids. The vortical pressure disturbances 15 that contain information regarding convection velocity have temporal and spatial length scales as well as coherence length scales that differ from other disturbances in the flow. The present invention utilizes these properties to preferentially select disturbances of a desired axial length scale and coherence length scale as will be more fully described hereinafter. For illustrative purposes, the terms vortical flow field and vortical pressure field will be used to describe the above-described group of unsteady pressure fields having temporal and spatial length and coherence scales described herein.

The velocity and flow measurement system of Fig. 1 utilizes the output of pressure sensors 18-24 to provide a signal indicative of the velocity of at least one of the fluids in a fluid mixture flowing in the pipe as described in WO 01/02810. As described therein, temporal and spatial filtering is used to precondition the pressure signals to effectively filter out acoustic pressure disturbances and other long wavelength (compared to the sensor spacing) pressure disturbances in the pipe 12 at the two sensing regions 14, 16, but retain a substantial portion of vortical pressure disturbances associated with the vortical flow field 15 and any other short wavelength (compared to the sensor spacing) low frequency pressure disturbances. The reader is referred to WO 01/02810 for further details. The velocity and flow system will work over a wide range of mixtures of oil/water/gas comprising the fluid within the pipe.

The various constituents will have vortical pressure disturbances convecting therewith having particular axial and coherence lengths. The present invention utilizes an array of spatial filters to detect and identify the various vortical pressure disturbances with respect to a particular constituent within the mixture. Once detected, the vortical pressure disturbances are combined with the spatial filtering to obtain a convection velocity at which a particular constituent within the vortical pressure disturbance is convecting. With reference to Figs. 1, 2 and 3 each of the spatial filters is combined with a velocity logic 40 as in a similar manner to that described in the referenced copending application. Various spacing signals ΔX on a line 62 indicative of the distances ΔX₁, ΔX₂, ΔX₃, ΔX₄ between the sensing regions are divided by the various time delay signals τ associated with each time lag between spatial filters on the line 60 by a divider 64. Each divider 64 provides various output signals on the line 42 indicative of convection velocities U_{c}(t)₁, U_{c}(t)₂, U_{c}(t)₃. The convection velocities U_{c}(t)₁, U_{c}(t)₂, U_{c}(t)₃ are, for example, each related to a particular constituent of a three constituent mixture of fluids flowing in the pipe 12. The various convection velocities are related to (or proportional to or approximately equal to) the average (or mean) flow velocity U_{f}(t)₁, U_{f}(t)₂, U_{f}(t)₃ of the various constituents of the fluid mixture. The velocities U_{c}(t)₁, U_{c}(t)₂, U_{c}(t)₃ and U_{f}(t)₁, U_{f}(t)₂, U_{f}(t)₃ may be converted to volumetric flow rate if there is sufficient knowledge of the phase concentrations and cross sectional area of the pipe. Such configurations as shown in the figures may also be used to determine a mean velocity for the fluid mixture.

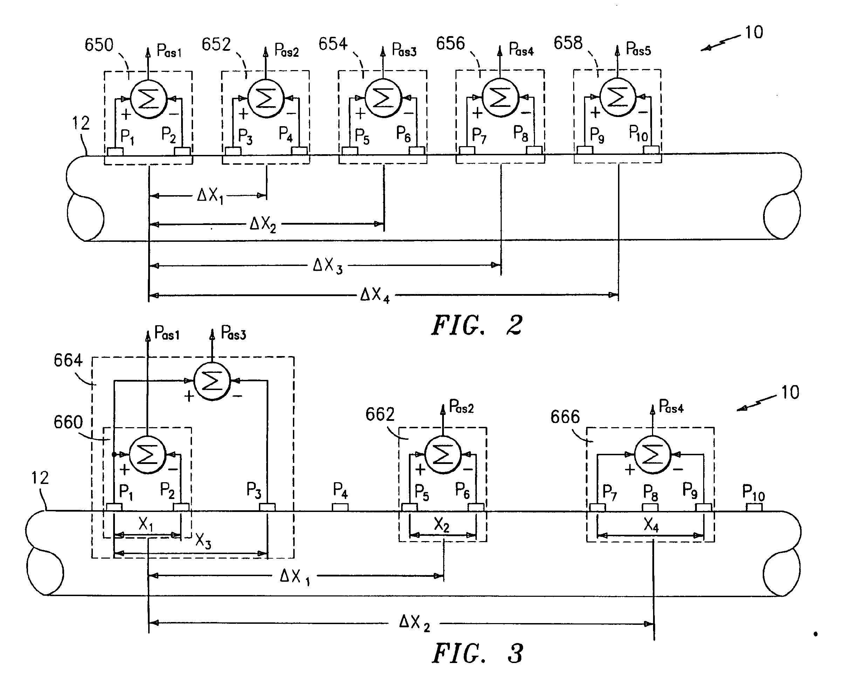

Referring to Fig. 2, a single sensor system 10 is shown having more than one pair of unsteady pressure sensors having different spacings to measure multiple flow rates in the same mixture. The invention may have an array of pressure sensors configured as spatial filters 650-658 each having a predetermined spacing ΔX₁-ΔX₄ between the first and each successive spatial filter. The spatial filters 650-658 may variously be combined with velocity logic 40 (Fig. 1) as described above. Such a configuration may be used to measure the various vortical pressure fields and the corresponding velocities for various constituents associated with a variety of unsteady and/or stochastic pressure fields within the mixture.

Referring to Fig. 3, alternatively, different pairs of spatial filters may have different internal spacing between sensors as well as different spacing between spatial filters. For example, a first pair of spatial filters 660,662 each has the same sensor spacing X₁, X₂, and a filter spacing of ΔX₁, and a second pair of spatial filters 664,666 each has the same sensor spacing X₃, X₄ (different from the first sensor spacing X₁, X₂) and a filter spacing of ΔX₂ (different from the first filter spacing ΔX₁). The spatial filters 660-666 may also be variously combined with velocity logic 40 (Fig. 1) as described above. Similarly, such a configuration may be used to measure the various vortical pressure fields and the corresponding velocities for various constituents within the mixture.

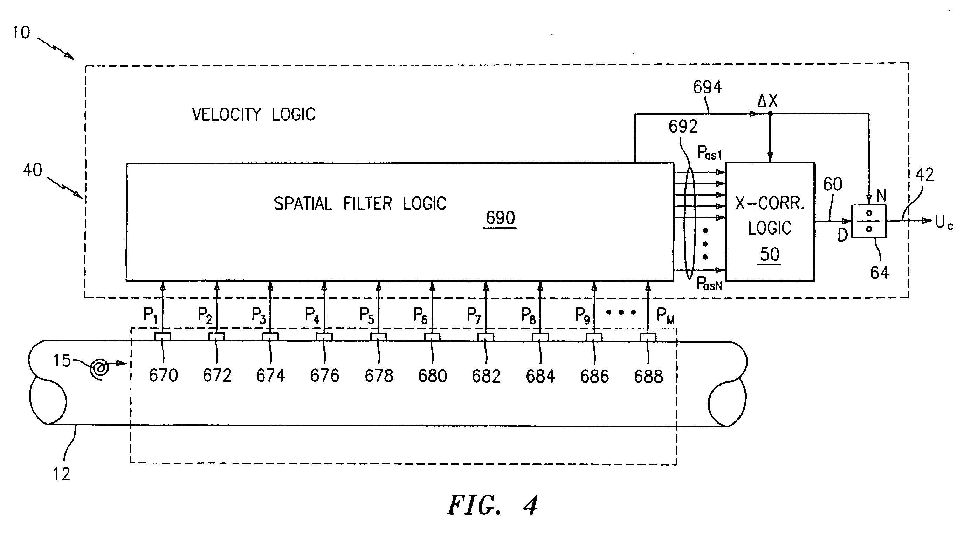

Referring to Fig. 4, in general, unsteady pressure signals P₁-Pₘ from a phased array of equally or unequally spaced ac pressure sensors 670-688 may be fed to spatial filter logic 690 which combines the sensor signals in various groupings to create multiple spatial filters and filter spacings which may be automatically reconfigured to select the desired spacing (e.g., X₁, X₂) between sensors within each spatial filter and the desired spacing (ΔX) between the spatial filters. In that case, the spatial filter logic 690 may provide a plurality of spatially filtered signals Pₐₛₗ-Pₐₛₙ on lines 692 to the cross-correlation logic 50 which selects the desired two input signals to cross-correlate based on a spacing signal ΔX on a line 694 from the filter logic 690. Also, the signal ΔX is fed to the numerator N input of the divider 64 for the calculation of the velocity signal U_{c} on the line 42. Alternatively, the logic 690 may provide only the two signals selected to be cross-correlated. In that case, the input ΔX would not need to be fed to the cross-correlation logic 50.

Although sensor system 10 is shown in the figures as an array of axially spaced pressure sensors it is within the scope of the present invention that the pressure sensors are circumferentially and variously combined with axially spaced sensors as described in the above referenced WO 01/02810.

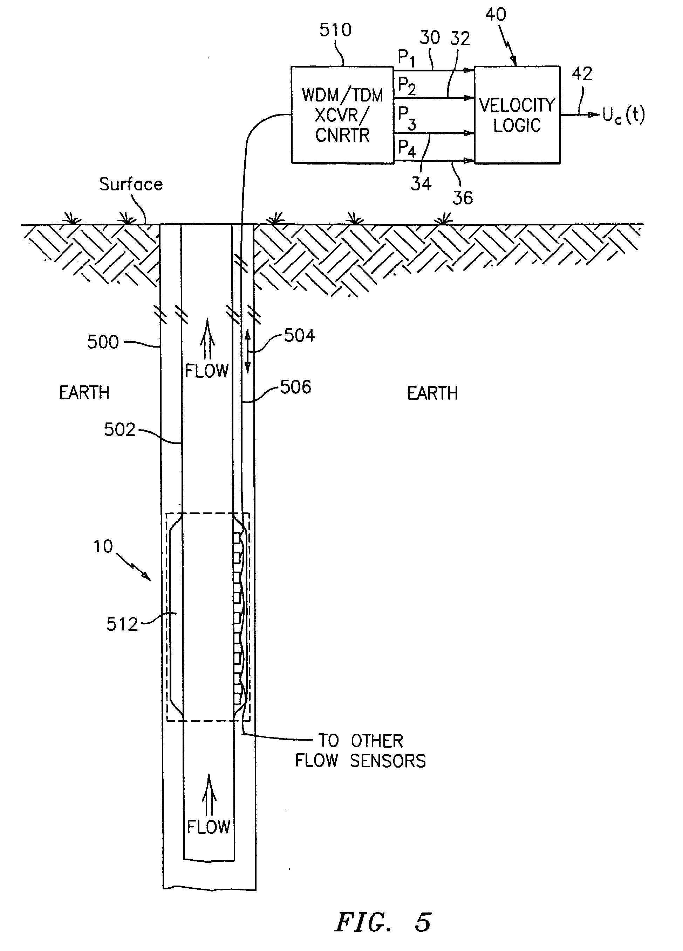

Referring to Fig. 5, there is shown an embodiment of the present invention in an oil or gas well application, the sensor array system 600 may be connected to or part of production tubing 502 within a well 500. An outer housing, sheath, or cover 512 may be located over the array 600 and attached to the pipe (not shown) at the axial ends to protect the array 600 (or fibers or components thereof) from damage during deployment, use, or retrieval, and/or to help isolate the sensors from external pressure effects that may exist outside the pipe 12, and/or to help isolate ac pressures in the pipe 12 from ac pressures outside the pipe 12. The array 600 is connected to a cable 506 which may comprise the optical fiber 300 (Fig. 1) and is connected to a transceiver/converter 510 located outside the well.

When optical sensors are used in the array 600, the transceiver/converter510 may be used to receive and transmit optical signals to the array 600 and provides output signals indicative of the pressures at the array 600. Also, the transceiver/converter 510 may be part of the Velocity Logic 40. The transceiver/converter 510 may be any device that performs the corresponding functions described herein. In particular, the transceiver/converter 510 together with the optical sensors described hereinbefore may use any type of optical grating-based measurement technique, e.g., scanning interferometric, scanning Fabry Perot, acousto-optic-tuned filter (AOTF), optical filter, time-of-flight, etc., having sufficient sensitivity to measure the ac pressures within the pipe, such as that described in one or more of the following references: A. Kersey et al., "Multiplexed fiber Bragg grating strain-sensor system with a Fabry-Perot wavelength filter", Opt. Letters, Vol. 18, No. 16, Aug. 1993, US Patent No. 5,493,390, issued Feb. 20, 1996 to Mauro Verasi, et al., US Patent No. 5,317,576, issued May 31,1994, to Ball et a!., US Patent No. 5,564,832, issued Oct. 15, 1996 to Ball et al., US Patent No. 5,513,913, issued May 7, 1996, to Ball et al., US Patent No. 5,426,297, issued June 20, 1995, to Dunphy et al., US Patent No. 5,401,956, issued March 28,1995 to Dunphy et al., US Patent No. 4,950,883, issued Aug. 21, 1990 to Glenn, US Patent No. 4,996,419, issued Feb. 26, 1991 to Morey. Also, the pressure sensors described herein may operate using one or more of the techniques described in the aforementioned references.

It should be understood that any of the features, characteristics, alternatives or modifications described regarding a particular embodiment herein may also be applied, used, or incorporated with any other embodiment described herein.

Although the invention has been described and illustrated with respect to exemplary embodiments thereof, the foregoing and various other additions and omissions may be made therein and thereto without departing from the scope of the present invention as defined by the appended claims.

## Claims

1. An apparatus for measuring a velocity of a fluid mixture moving in a conduit (12), comprising: the conduit (12); a spatial array (600) of sensors (18-24; 670-688), each sensor (18-24; 670-688) being disposed at a different axial location along the conduit (12) and being operable to provide a sensor signal (P₁-P₄; P₁-P₁₀; P₁-P_{M}) indicative of a property of the fluid; spatial filter logic (690) operable to use said sensors (18-24; 670-688) to provide a plurality of filters (33, 35; 650-658; 660-666) for measuring a vortical flow field (15) at a plurality of different respective axial locations (14, 16) along the conduit (12) thereby to provide a corresponding plurality of vortical flow signals (Pₐₛ₁-Pₐₛ₂; Pₐₛ₁-Pₐₛ₅; Pₐₛ₁-Pₐₛ₄; Pₐₛ₁-P_{asN}), each filter of the plurality (33, 35; 650-658; 660-666) having a predetermined axial separation (ΔX; ΔX₁-ΔX₄; ΔX₁-ΔX₃) from each other filter of the plurality (33, 35; 650-658; 660-666), and each filter of the plurality (33, 35; 650-658; 660-666) being connected operatively to a different pair of sensors of said plurality (18-24; 670-688) for receiving therefrom a corresponding pair of sensor signals (P₁-P₄; P₁-P₁₀; P₁-P_{M}); and a signal processor (50, 64) operatively connected for receiving vortical flow signals (Pₐₛ₁-Pₐₛ₂; Pₐₛ₁-Pₐₛ₅; Pₐₛ₁-Pₐₛ₄; Pₐₛ₁-P_{asN}) at least including those from a preselected pair of filters of said plurality (33, 35; 650-658; 660-666) and operable to provide a vortical velocity signal (U_{c}) indicative of a velocity of the vortical flow field (15) moving between the two filters of the preselected pair; wherein each of said sensors (18-24; 670-688) is an unsteady pressure sensor (18-24; 670-688), said property of said fluid is an unsteady pressure of the fluid, said vortical flow field (15) measured by said filters (33, 35; 650-658; 660-666) is a vortical pressure field (15), said vortical flow signals (Pₐₛ₁-Pₐₛ₂; Pₐₛ₁-Pₐₛ₅; Pₐₛ₁-Pₐₛ₄; Pₐₛ₁-P_{asN}) are vortical pressure signals (Pₐₛ₁-Pₐₛ₂; Pₐₛ₁-Pₐₛ₅; Pₐₛ₁-Pₐₛ₄; Pₐₛ₁-P_{asN}), said spatial filter logic (690) is reconfigurable to allow selection of the desired spacing (X₁-X₄) between sensors within each filter of a preselected pair and the desired spacing (ΔX; ΔX₁-ΔX₄; ΔX₁-ΔX₃) between the filters of that pair and operable to provide at least three filters, and said spatial filter logic ( 690) and signal processor (50, 54) are operable cooperatively to provide a vortical velocity signal (U_{c}) for at least two different preselected pairs of filters.

2. The apparatus of claim 1, wherein both filters in a pair of filters have substantially the same inter-sensor separation.

3. The apparatus of claim 1 or 2, wherein a filter is shareable in common between two pairs of filters, and a sensor is shareable in common between two filters.

4. The apparatus of claim 1, 2 or 3, wherein said filters (33, 35; 650-658; 660-666) filter out acoustic pressure disturbances and other pressure disturbances having a long wavelength as compared to the spacing (X₁-X₄) between sensors, and retain vortical pressure disturbances associated with the vortical flow field and any low frequency pressure disturbances having a short wavelength as compared to the spacing (X₁-X₄) between sensors.

5. The apparatus of any preceding claim, wherein the spatial filter logic is operable to provide vortical pressure signals from each of the plurality of filters for selection by the signal processor.

6. The apparatus of any preceding claim, wherein the spatial filter logic is operable to provide only those vortical pressure signals provided from at least one of the at least two preselected pairs of filters to the signal processor.

7. The apparatus or any one of claims 1 to 5, wherein the signal processor is operable to provide a vortical velocity signal (U_{c}) for each of the at least two preselected pairs of filters.

8. The apparatus of any preceding claim, wherein said signal processor (50, 64) comprises logic (50) which calculates a cross-correlation between vortical pressure signals from a preselected pair of filters and provides a time delay signal (τ) indicative of the time it takes for said vortical pressure field (15) to move between the axial locations of the respective filters of that pair.

9. The apparatus of claim 8, wherein said signal processor (50, 64) comprises logic (64) responsive to said time delay signal (τ) which provides a vortical velocity signal (U_{c}) indicative of the velocity of said vortical pressure field (15) moving in said conduit (12).

10. The apparatus of claim 9, wherein said velocity signal (U_{c}) is related to the velocity of said fluid mixture moving in said conduit (12).

11. The apparatus of claim 9, wherein said velocity signal (U_{c}) is indicative of the velocity of said fluid mixture moving in said conduit (12).

12. The apparatus of any preceding claim, wherein said array of pressure sensors comprises at least four unsteady pressure sensors (18-24; 670-688).

13. The apparatus of any preceding claim, wherein the pressure sensors (18-24; 670-688) comprise at least one optical strain gage disposed on a surface of the conduit (12).

14. The apparatus of claim 13, wherein the or each optical strain gage comprises at least one Bragg grating.

15. The apparatus of any preceding claim, wherein said fluid mixture comprised of a plurality of constituents, and wherein each velocity signal provided by the signal processor is indicative of or related to the velocity of one of said constituents moving in said conduit (12).

16. The apparatus of any preceding claim, wherein said conduit (12) is a pipe.

17. Use of the apparatus of any preceding claim for measuring a fluid mixture comprised of a plurality of constituents, wherein each of said velocity signals (U_{c}) is indicative of or related to the velocity of one of said constituents moving in said conduit (12).

18. The use of claim 17, wherein the constituents are comprised of oil, gas and water.

## Patentansprüche

1. Vorrichtung zum Messen einer Geschwindigkeit einer Fluidmischung, die sich in einer Leitung (12) bewegt, umfassend:
die Leitung (12);
ein räumliches Array (600) von Sensoren (18-24; 670-688), wobei jeder Sensor (18-24; 670-688) an einer verschiedenen Axialstelle entlang der Leitung (12) angeordnet ist und betriebsfähig ist, ein Sensorsignal (P₁-P₄; P₁-P₁₀; P₁-P_{M}) bereitzustellen, das eine Eigenschaft des Fluids anzeigt;
räumliche Filterlogik (690), betriebsfähig zum Verwenden der Sensoren (18-24; 670-688), um eine Vielzahl von Filtern (33, 35; 650-658; 660-666) zum Messen eines Wirbelstromfelds (15) an einer Vielzahl von verschiedenen jeweiligen Axialstellen (14, 16) entlang der Leitung (12) bereitzustellen, um **dadurch** eine entsprechende Vielzahl von Wirbelstromsignalen (Pₐₛ₁-Pₐₛ₂; Pₐₛ₁-Pₐₛ₅; Pₐₛ₁-Pₐₛ₄; Pₐₛ₁-P_{asN}) bereitzustellen,
wobei jedes Filter der Vielzahl (33, 35; 650-658; 660-666) einen vorbestimmten Axialabstand (ΔX; ΔX₁-ΔX₄; ΔX₁-ΔX₃) von jedem anderen Filter der Vielzahl (33, 35; 650-658; 660-666) hat und jedes Filter der Vielzahl (33, 35; 650-658; 660-666) betriebsfähig mit einem verschiedenen Paar von Sensoren der Vielzahl (18-24; 670-688) verbunden ist, um davon ein entsprechendes Paar von Sensorsignalen (P₁-P₄; P₁-P₁₀; P₁-P_{M}) zu empfangen; und
einen Signalprozessor (50, 64), der zum Empfang von Wirbelstromsignalen (Pₐₛ₁-Pₐₛ₂; Pₐₛ₁-Pₐₛ₅; Pₐₛ₁-Pₐₛ₄; Pₐₛ₁-P_{asN}) betriebsfähig verbunden ist, die mindestens die aus einem vorgewählten Filterpaar der Vielzahl (33, 35; 650-658; 660-666) enthalten, und betriebsfähig ist, ein Wirbelgeschwindigkeitssignal (U_{c}) bereitzustellen, das eine Geschwindigkeit des Wirbelstromfelds (15) anzeigt, das sich zwischen den zwei Filtern des vorgewählten Paars bewegt;
worin jeder der Sensoren (18-24; 670-688) ein unstetiger Drucksensor (18-24; 670-688) ist, die Eigenschaft des Fluids ein unstetiger Druck des Fluids ist, das durch die Filter (33, 35; 650-658; 660-666) gemessene Wirbelstromfeld (15) ein Wirbeldruckfeld (15) ist, die Wirbelstromsignale (Pₐₛ₁-Pₐₛ₂; Pₐₛ₁-Pₐₛ₅; Pₐₛ₁-Pₐₛ₄; Pₐₛ₁-P_{asN}) Wirbeldrucksignale (Pₐₛ₁-Pₐₛ₂; Pₐₛ₁-Pₐₛ₅; Pₐₛ₁-Pₐₛ₄; Pₐₛ₁-P_{asN}) sind, die räumliche Filterlogik (690) rekonfigurierbar ist, um die Auswahl der erwünschten Abstände (X₁-X₄) zwischen Sensoren innerhalb eines jeden Filters eines vorgewählten Paars und der erwünschten Abstände (ΔX; ΔX₁-ΔX₄; ΔX₁-ΔX₃) zwischen den Filtern dieses Paars zu ermöglichen, und betriebsfähig ist, mindestens drei Filter bereitzustellen, und die räumliche Filterlogik (690) und der Signalprozessor (50, 54) gemeinsam betriebsfähig sind, ein Wirbelgeschwindigkeitssignal (U_{c}) für mindestens zwei verschiedene vorgewählte Filterpaare bereitzustellen.

2. Vorrichtung nach Anspruch 1, worin beide Filter in einem Filterpaar im Wesentlichen denselben Inter-Sensor-Abstand haben.

3. Vorrichtung nach Anspruch 1 oder 2, worin ein Filter von zwei Filterpaaren gemeinsam benutztbar werden kann und ein Sensor von zwei Filtern gemeinsam benutztbar werden kann.

4. Vorrichtung nach Anspruch 1, 2 oder 3, worin die Filter (33, 35; 650-658; 660-666) akustische Druckstörungen und andere Druckstörungen ausfiltern, die im Vergleich zu dem Abstand (X₁-X₄) zwischen Sensoren eine lange Wellenlänge haben, und mit dem Wirbelstromfeld assoziierte Wirbeldruckstörungen und Niederfrequenz-Druckstörungen beibehalten, die eine im Vergleich zu dem Abstand (X₁-X₄) zwischen Sensoren kurze Wellenlänge haben.

5. Vorrichtung nach einem vorhergehenden Anspruch, worin die räumliche Filterlogik betriebsfähig ist, Wirbeldrucksignale von jedem der Vielzahl von Filtern zur Auswahl durch den Signalprozessor bereitzustellen.

6. Vorrichtung nach einem vorhergehenden Anspruch, worin die räumliche Filterlogik betriebsfähig ist, nur solche Wirbeldrucksignale bereitzustellen, die dem Signalprozessor von mindestens einem der mindestens zwei vorgewählten Filterpaare geliefert werden.

7. Vorrichtung nach einem der Ansprüche 1 bis 5, worin der Signalprozessor betriebsfähig ist, ein Wirbelgeschwindigkeitssignal (U_{c}) für jedes der mindestens zwei vorgewählten Filterpaare bereitzustellen.

8. Vorrichtung nach einem vorhergehenden Anspruch, worin der Signalprozessor (50, 64) Logik (50) umfasst, die eine Kreuzkorrelation zwischen Wirbeldrucksignalen von einem vorgewählten Filterpaar berechnet und ein Zeitverzögerungssignal (τ) bereitstellt, das die Zeit anzeigt, die das Wirbeldruckfeld (15) benötigt, um sich zwischen den Axialstellen der jeweiligen Filter dieses Paars zu bewegen.

9. Vorrichtung nach Anspruch 8, worin der Signalprozessor (50, 64) für das Zeitverzögerungssignal (τ) ansprechempfindliche Logik (64) umfasst, die ein Wirbelgeschwindigkeitssignal (U_{c}) bereitstellt, das die Geschwindigkeit des sich in der Leitung (12) bewegenden Wirbeldruckfelds (15) anzeigt.

10. Vorrichtung nach Anspruch 9, worin das Geschwindigkeitssignal (U_{c}) die Geschwindigkeit der sich in der Leitung (12) bewegenden Fluidmischung betrifft.

11. Vorrichtung nach Anspruch 9, worin das Geschwindigkeitssignal (U_{c}) die Geschwindigkeit der sich in der Leitung (12) bewegenden Fluidmischung anzeigt.

12. Vorrichtung nach einem vorhergehenden Anspruch, worin das Array von Drucksensoren mindestens vier unstetige Drucksensoren (18-24; 670-688) umfasst.

13. Vorrichtung nach einem vorhergehenden Anspruch, worin die Drucksensoren (18-24; 670-688) mindestens einen optischen Beanspruchungsmesser umfassen, der auf einer Oberfläche der Leitung (12) angeordnet ist.

14. Vorrichtung nach Anspruch 13, worin der oder jeder optische Beanspruchungsmesser mindestens ein Bragg-Gitter umfasst.

15. Vorrichtung nach einem vorhergehenden Anspruch, worin die Fluidmischung eine Vielzahl von Bestandteilen umfasst und worin jedes vom Signalprozessor bereitgestellte Geschwindigkeitssignal die Geschwindigkeit von einem der sich in der Leitung (12) bewegenden Bestandteile anzeigt oder betrifft.

16. Vorrichtung nach einem vorhergehenden Anspruch, worin die Leitung (12) ein Rohr ist.

17. Gebrauch der Vorrichtung nach einem vorhergehenden Anspruch zum Messen einer Fluidmischung, die aus einer Vielzahl von Bestandteilen besteht, worin jedes der Geschwindigkeitssignale (U_{c}) die Geschwindigkeit von einem der sich in der Leitung (12) bewegenden Bestandteile anzeigt oder betrifft.

18. Gebrauch nach Anspruch 17, worin die Bestandteile Öl, Gas und Wasser umfassen.

## Revendications

1. Dispositif pour mesurer une vitesse d'un mélange fluidique se déplaçant dans un conduit (12), comprenant :
le conduit (12) ;
un ensemble spatial (600) de capteurs (18 à 24 ; 670 à 688), chaque capteur (18 à 24 ; 670 à 688) étant disposé à un emplacement axial différent le long du conduit (12) et pouvant être mis en oeuvre pour fournir un signal de capteur (P₁ à P₄ ; P₁ à P₁₀ ; P₁ à P_{M}) indicatif d'une propriété du fluide ;
une logique de filtrage spatial (690) pouvant être mise en oeuvre pour utiliser lesdits capteurs (18 à à 24 ; 670 à 688) pour réaliser une pluralité de filtres (33, 35 ; 650 à 658 ; 660 à 666) pour mesurer un champ d'écoulement tourbillonnaire (15) en une pluralité d'emplacements axiaux (14, 16) respectifs différents le long du conduit (12) pour, de ce fait, fournir une pluralité correspondante de signaux d'écoulement tourbillonnaire (Pₐₛ₁ à Pₐₛ₂ ; Pₐₛ₁ à Pₐₛ₅ ; Pₐₛ₁ à Pₐₛ₄ ; Pₐₛ₁ à P_{asN}), chaque filtre de la pluralité (33, 35 ; 650 à 658 ; 660 à 666) ayant une séparation axiale (ΔX ; ΔX₁ à ΔX₄ ; ΔX₁ à ΔX₃) prédéterminée par rapport à chaque autre filtre de la pluralité (33, 35 ; 650 à 658 ; 660 à 666), et chaque filtre de la pluralité (33, 35 ; 650 à 658 ; 660 à 666) étant connecté de manière fonctionnelle à une paire différente de capteurs de ladite pluralité (18 à 24 ; 670 à 688) pour recevoir de ceux-ci une paire correspondante de signaux de capteur (P₁ à P₄ ; P₁ à P₁₀ ; P₁ à P_{M}) ; et
un processeur de signal (50, 64) connecté de manière fonctionnelle pour recevoir des signaux d'écoulement tourbillonnaire (Pₐₛ₁ à Pₐₛ₂ ; Pₐₛ₁ à Pₐₛ₅ ; Pₐₛ₁ à Pₐₛ₄ ; Pₐₛ₁ à P_{asN}) comprenant au moins ceux provenant d'une paire présélectionnée de filtres de ladite pluralité (33, 35 ; 650 à 658 ; 660 à 666) et pouvant être mis en oeuvre pour fournir un signal de vitesse tourbillonnaire (U_{c}) indicatif d'une vitesse du champ d'écoulement tourbillonnaire (15) se déplaçant entre les deux filtres de la paire présélectionnée ;
dans lequel chacun desdits capteurs (18 à 24 ; 670 à 688) est un capteur de pression instationnaire (18 à 24 ; 670 à 688), ladite propriété dudit fluide est une pression instationnaire du fluide, ledit champ d'écoulement tourbillonnaire (15) mesuré par lesdits filtres (33, 35 ; 650 à 658 ; 660 à 666) est un champ de pression tourbillonnaire (15), lesdits signaux d'écoulement tourbillonnaire (Pₐₛ₁ à Pₐₛ₂ ; Pₐₛ₁ à Pₐₛ₅ ; Pₐₛ₁ à Pₐₛ₄ ; Pₐₛ₁ à P_{asN}) sont des signaux de pression tourbillonnaire (Pₐₛ₁ à Pₐₛ₂ ; Pₐₛ₁ à Pₐₛ₅ ; Pₐₛ₁ à Pₐₛ₄ ; Pₐₛ₁ à P_{asN}), ladite logique de filtrage spatial (690) peut être reconfigurée pour permettre la sélection de l'espacement (X₁ à X₄) souhaité entre les capteurs dans chaque filtre d'une paire sélectionnée et l'espacement (ΔX ; ΔX₁ à ΔX₄ ; ΔX₁ à ΔX₃) souhaité entre les filtres de cette paire et peut être mise en oeuvre pour réaliser au moins trois filtres, et ladite logique de filtrage spatial (690) et ledit processeur de signal (50, 54) peuvent être mis en oeuvre en coopération pour fournir un signal de vitesse tourbillonnaire (U_{c}) pour au moins deux paires de filtres présélectionnées différentes.

2. Dispositif selon la revendication 1, dans lequel les deux filtres dans une paire de filtres ont sensiblement la même séparation entre capteurs.

3. Dispositif selon la revendication 1 ou 2, dans lequel un filtre peut être partagé en commun entre deux paires de filtres, et un capteur peut être partagé en commun entre deux filtres.

4. Dispositif selon la revendication 1, 2 ou 3, dans lequel lesdits filtres (33, 35 ; 650 à 658 ; 660 à 666) éliminent par filtrage les perturbations de pression acoustique et les autres perturbations de pression ayant une longue longueur d'onde en comparaison de l'espacement (X₁ à X₄) entre les capteurs, et conservent les perturbations de pression tourbillonnaire associées au champ d'écoulement tourbillonnaire et toutes perturbations de pression basse fréquence ayant une courte longueur d'onde en comparaison de l'espacement (X₁ à X₄) entre les capteurs.

5. Dispositif selon l'une quelconque revendication précédente, dans lequel la logique de filtrage spatial peut être mise en oeuvre pour fournir des signaux de pression tourbillonnaire à partir de chacun de la pluralité de filtres pour une sélection par le processeur de signal.

6. Dispositif selon l'une quelconque revendication précédente, dans lequel la logique de filtrage spatial peut être mise en oeuvre pour fournir uniquement les signaux de pression tourbillonnaire fournis par au moins l'une desdites au moins deux paires de filtres présélectionnées au processeur de signal.

7. Dispositif selon l'une quelconque des revendications 1 à 5, dans lequel le processeur de signal peut être mis en oeuvre pour fournir un signal de vitesse tourbillonnaire (U_{c}) pour chacune desdites au moins deux paires de filtres présélectionnées.

8. Dispositif selon l'une quelconque revendication précédente, dans lequel ledit processeur de signal (50, 64) comprend une logique (50) qui calcule une corrélation croisée entre les signaux de pression tourbillonnaire provenant d'une paire de filtres présélectionnée et qui fournit un signal de retard (τ) indicatif du temps nécessaire pour que ledit champ de pression tourbillonnaire (15) se déplace entre les emplacements axiaux des filtres respectifs de cette paire.

9. Dispositif selon la revendication 8, dans lequel ledit processeur de signal (50, 64) comprend une logique (64) sensible audit signal de retard (τ) qui fournit un signal de vitesse tourbillonnaire (U_{c}) indicatif de la vitesse dudit champ de pression tourbillonnaire (15) se déplaçant dans ledit conduit (12).

10. Dispositif selon la revendication 9, dans lequel ledit signal de vitesse (U_{c}) est lié à la vitesse dudit mélange fluidique se déplaçant dans ledit conduit (12).

11. Dispositif selon la revendication 9, dans lequel ledit signal de vitesse (U_{c}) est indicatif de la vitesse dudit mélange fluidique se déplaçant dans ledit conduit (12).

12. Dispositif selon l'une quelconque revendication précédente, dans lequel ledit ensemble de capteurs de pression comprend au moins quatre capteurs de pression instationnaire (18 à 24 ; 670 à 688).

13. Dispositif selon l'une quelconque revendication précédente, dans lequel les capteurs de pression (18 à 24 ; 670 à 688) comprennent au moins une jauge de contrainte optique disposée sur une surface du conduit (12).

14. Dispositif selon la revendication 13, dans lequel ladite ou chaque jauge de contrainte optique comprend au moins un réseau de Bragg.

15. Dispositif selon l'une quelconque revendication précédente, dans lequel ledit mélange fluidique est composé d'une pluralité de constituants, et dans lequel chaque signal de vitesse fourni par le processeur de signal est indicatif de la vitesse de l'un desdits constituants se déplaçant dans ledit conduit (12) ou lié à celle-ci.

16. Dispositif selon l'une quelconque revendication précédente, dans lequel ledit conduit (12) est un tuyau.

17. Utilisation du dispositif selon l'une quelconque revendication précédente pour mesurer un mélange fluidique composé d'une pluralité de constituants, dans laquelle chacun desdits signaux de vitesse (U_{c}) est indicatif de la vitesse de l'un desdits constituants se déplaçant dans ledit conduit (12) ou lié à celle-ci.

18. Utilisation selon la revendication 17, dans laquelle les constituants comprennent une huile, un gaz et de l'eau.
